# EUROPÄISCHE PATENTSCHRIFT

(11) **EP 0 608 732 B1**
(45) Veröffentlichungstag und Bekanntmachung des Hinweises auf die Patenterteilung: **11.06.1997**
(21) Anmeldenummer: 94100549.8
(22) Anmeldetag: 15.01.1994
(51) Int. Cl.: G01S 13/00

(54) **Sensoreinrichtung zum Sensieren einer Bedrohung**
Sensor apparatus for detecting a threat
Dispositif de capteur pour détecter une menace

(30) Priorität: 23.01.1993 DE 4301826
(43) Veröffentlichungstag der Anmeldung: 03.08.1994
(73) Patentinhaber: DIEHL GMBH & CO., 90478 Nürnberg (DE)
(72) Erfinder: Westphal, Robert, Dr., D-90425 Nürnberg (DE)

(56) Entgegenhaltungen:
- DE-C- 977 984
- US-A- 4 741 245
- US-A- 5 187 485
- MERRILL IVAN SKOLNIK 'Introduction to radar systems' 1981 , MCGRAW HILL BOOK COMPANY , SINGAPORE Radar development prior to world war II * Seite 9, Absatz 1.5 - Seite 12 * Bistatic radar : description * Seite 553, Absatz 14.6 - Seite 555; Abbildung 14.12 *

## Beschreibung

Die Erfindung betrifft eine Sensoreinrichtung gemäß dem Oberbegriff des Anspruches 1.

Eine derartige Sensoreinrichtung ist aus der DE-PS 977 984 als Vorrichtung zum Schutz von Objekten gegen Geschoßeinwirkung bekannt, wobei dort ein stationäres oder zu Lande bzw. zu Wasser verfahrbares Objekt sowohl einen Sender wie auch eine Anzahl an Empfängern trägt, um gewissermaßen ein immaterielles Netz aus Funkverbindungen im Halbraum um sich herum aufzuspannen. Beim Eintritt eines Fremdkörpers in dieses Netz soll die davon tangierte Funkverbindung nach Art einer Lichtschranke ein Abwehr-Mittel in Form einer Garbe aus kleinsten Hohlladungen zünden, um den eintretenden Fremdkörper zu beschädigen oder sogar zu vernichten. Da dieses Abwehrnetz mit seinen Sendern und Empfängern für die einzelnen Funkverbindungen aber in vergleichsweise geringem Abstand vom zu schützenden Objekt selbst aufgespannt ist, muß dieses Objekt gegen die im Zuge des Abwehrmechanismus unvermeidliche Splitterwirkung gepanzert sein. Die Detektion des Angreifers unmittelbar vor Erreichen des zu schützenden Objektes verhindert nämlich wirksame Gegenmaßnahmen wie Ausweichmannöver oder auf Distanz wirkende Abwehr-Mittel. Deshalb ist diese Maßnahme beispielsweise zum Schutz von Transportflugzeugen nicht geeignet. Hinzu kommt eine ge steigerte Gefährdung des zu schützenden Objektes dadurch, daß es für das Aufspannen des Abwehr-Netzes mit einem Sender ausgestattet sein muß und somit für den Angreifer besonders leicht geortet werden kann.

Für eine Bedrohungsanalyse über etwas größere Distanz wird deshalb auf monostatisch arbeitende Radar-Einrichtungen zurückgegriffen, die zugleich der Führung von Luftabwehr-Flugkörpern dienen können, wie im Falle des Systems PATRIOT (vgl. SOLDAT UND TECHNIK Heft 11/1984, Seiten 601-609, insbesondere Fig.6 auf Seite 606). Mit solchen voluminösen Radaranlagen, ganz abgesehen von ihrer schweren Energieversorgung zur Bereitstellung einiger 100 kVA, können allerdings bewegliche zu schützende Objekte in aller Regel nicht ausgestattet werden, zumal nicht zu schützende Flugzeuge. Außerdem ist die Eigengefährdung solcher Radaranlagen infolge ihrer hohen Energieabstrahlung sehr groß. In der jeweiligen Ortungsrichtung ist aber dennoch ihre wirksame Reichweite dadurch vergleichsweise beschränkt, daß sowohl die ausgesendete wie auch die von einem potentiellen Angreifer reflektierte Energie jeweils eine Dämpfung mit dem Quadrat der Entfernung erfährt. Schließlich arbeiten solche Radaranlagen, bei der Rundum-Überwachung ohne spezielle Richtungseinweisung, relativ träge, weil sie das Umfeld nur in schmalen aufeinanderfolgenden Richtkeulen absuchen können. Denn bei der Rundumsuche würde die Detektionsreichweite, wegen kurzer Zielverweilzeiten im darstrahl, noch wesentlich weiter sinken.

Der Erfindung liegt deshalb die Aufgabe zugrunde, eine Sensoreinrichtung gattungsgemäßer Art dahingehend weiterzubilden, daß sie nicht nur hinsichtlich ihres Schaltungsaufwandes und Bauvolumens unproblematisch auch in fliegenden Objekten einsetzbar ist, sondern darüber hinaus auch eine eigenverratssichere Bedrohungsanalyse von erdgebundenen Objekten aus bis zu mittlerer Reichweite und von oberhalb der Erdoberfläche operierenden Objekten aus bis in sehr große Entfernungen, verglichen etwa mit einem eingeführten Luftabwehr-Radar, ermöglicht.

Diese Aufgabe ist bei einer Sensoreinrichtung gattungsgemäßer Art im wesentlichen dadurch gelöst, daß sie nach dem Kennzeichnungsteil des Patentanspruches 1 ausgelegt ist.

Nach dieser Lösung wird das zu schützende Objekt mit wenigstens einer vergleichsweise kleinvolumigen Empfangseinrichtung ausgestattet, die für Funkempfang von Satelliten ausgelegt ist. Das System ist deshalb problemlos luftverladbar und so insbesondere auch für kurzfristig bereitzustellende Krisenreaktionskräfte einsetzbar, da Sender und deren stets recht aufwendige Energieversorgung nicht zur Schutzausrüstung gehören. Dadurch entfallen auch alle mit der Energieabstrahlung zusammenhängenden ökologischen und Elektrosmog-Probleme.

Vorzugsweise werden Signale von möglichst tief stehenden Satelliten empfangen und ausgewertet, weil deren jeweilige Funkverbindung zum empfangenden Objekt einen entsprechend größeren Flächenbereich längs der Erdoberfläche überstreicht, als im Falle des Empfangs höherstehender Satelliten, aber insbesondere auch als im Falle des Empfangs von erdgebundenen Sendern. Dabei hat der Empfang von Satelliten-Sendern gegenüber demjenigen von mittels Flugkörpern transportierten Sendern den Vorteil, daß die Bewegungsbahnen der Satelliten tabellarisch bekannt und durch Unbefugte praktisch nicht beeinflußbar sind. Bevorzugt wird auf Funkempfang von Navigationssatellitensystemen zurückgegriffen, weil von denen regelmäßig mehrere um den aktuellen Standpunkt des zu schützenden Objektes herum oberhalb des Horizontes unter verschiedenen Aspekt-Winkeln stehen, und weil die Satelliten eines solchen Systemes bereits zeitlich koordinierte und für die korrelative Signalverarbeitung optimierte Informationen in einem Frequenzbereich (oberhalb 1 GHz) abstrahlen, der den Lichtstrahlen ähnliche lineare Ausbreitungseigenschaften aufweist.

Wenn in eine solche Satelliten-Funkverbindung ein Fremdkörper, bei dem es sich um ein gegen das zu schützende Objekt gerichtetes Angriffs-Projektil handeln kann, eintritt, dann treten bei der Auswertung der Informationen aus diesem Funkempfang, aufgrund von Abschattungs-, Streuungs- oder Absorptionseffekten, Unregelmäßigkeiten auf, die beispielsweise eine bis dahin stationäre Satelliten-Entfernungsmessung stören oder die Polarisation des empfangenen Satellitensignals verändern. Da der Standort des betreffenden Satelliten, dessen Empfang gerade ausgewertet wird, relativ zum zu schützenden Objekt bekannt ist, bestimmt sich aus dem aktuell gestörten Funkempfang die Richtung zum potentiellen Angreifer. Dessen weiteres Verhalten kann dann gezielt beobachtet, bzw. dessen Identität durch die üblichen Aufklärungsmittel geklärt, werden. Das Objekt selbst erfährt durch diese bis in größte Entfernung wirkende Bedrohungsanalyse keinerlei zusätzliche Gefährdung, weil es sich dafür nicht selbst durch Energieabstrahlung verrät (Radarstille). Dies ist insbesondere für seegestützte Sensorplattformen sehr wichtig.

Da also für die Funktion eines solchen, über extrem weite Entfernungen wirksamen, Systems zur Bedrohungsanalyse mit Frühwarnwirkung keinerlei Installationen am Einsatzort des zu schützenden Objektes erforderlich sind, sondern sendeseitig auf eine freie und stets optimierbare Auswahl aus den ohnehin über dem Horizont sichtbaren Satellitensendern zurückgegriffen werden kann, eignet sich die erfindungsgemäße passive Sensoreinrichtung insbesondere auch zum Selbstschutz von Boden-, See- und Luftfahrzeugen für die Versorgung von Krisenreaktionskräften, die kurzfristig in fremdes Gelände verlegt werden müssen und dort terroristischen Bedrohungen durch Boden-Luft-, Luft-Boden- oder Boden-Boden-Projektile über mittlere bis große Entfernungen bzw. durch versteckt im Gelände niedrig operierende Hubschrauber besonders ausgesetzt sind.

Zusätzliche Alternativen und Weiterbildungen sowie weitere Merkmale und Vorteile der Erfindung ergeben sich aus dem weiteren Ansprüchen und, auch unter Berücksichtigung der Darlegungen in der Zusammenfassung, aus nachstehender Beschreibung eines in der Zeichnung unter Beschränkung auf das Wesentliche stark abstrahiert skizzierten bevorzugten Realisierungsbeispiels zur erfindungsgemäßen Lösung. In der Zeichnung zeigt:
Fig. 1 in Prinzipdarstellung eine weitreichende Bedrohungssituation und deren passive Detektion vom bedrohten Objekt aus und

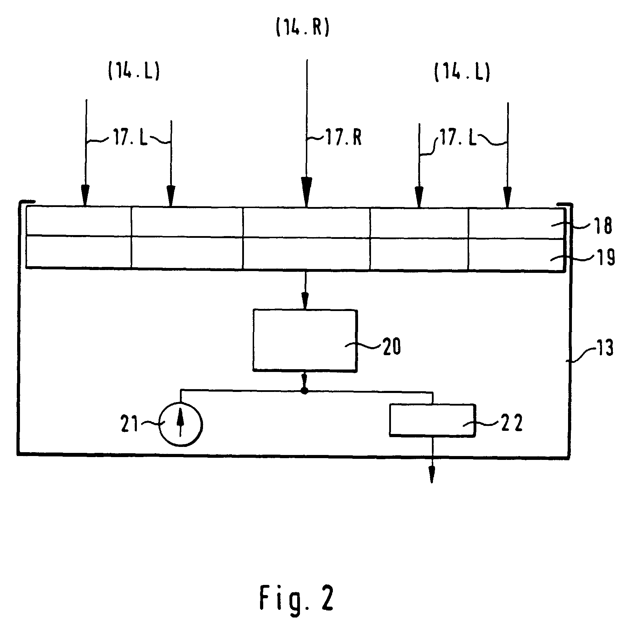

Fig. 2 in Prinzipdarstellung die Empfangseinrichtung, mit der das Objekt nach Fig. 1 zur Analyse der aktuellen Bedrohungssituation ausgestattet ist.

Das potentiell bedrohte Objekt 11 kann stationär wie etwa eine bauliche Einrichtung, quasi-stationär wie ein relativ langsam sich bewegendes (Land- oder See-)Fahrzeug oder gemäß dem dargestellten Beispielsfalle ein Luftfahrzeug sein, etwa eine Transportmaschine für den Nachschub von Unterstützungs- und Hilfsgütern am Einsatzort von Krisenaktionskräften. Solch ein Einsatz in Krisengebieten steigert die potentielle Bedrohung, zumal provisorisch und nur auf Zeit angelegte Einsatzorte nicht über eine weiträumig vernetzte Aufklärungs- und Abwehr-Logistik gegen einen potentiellen Angreifer 12, etwa ein terroristisches Boden-Luft-Projektil, verfügen.

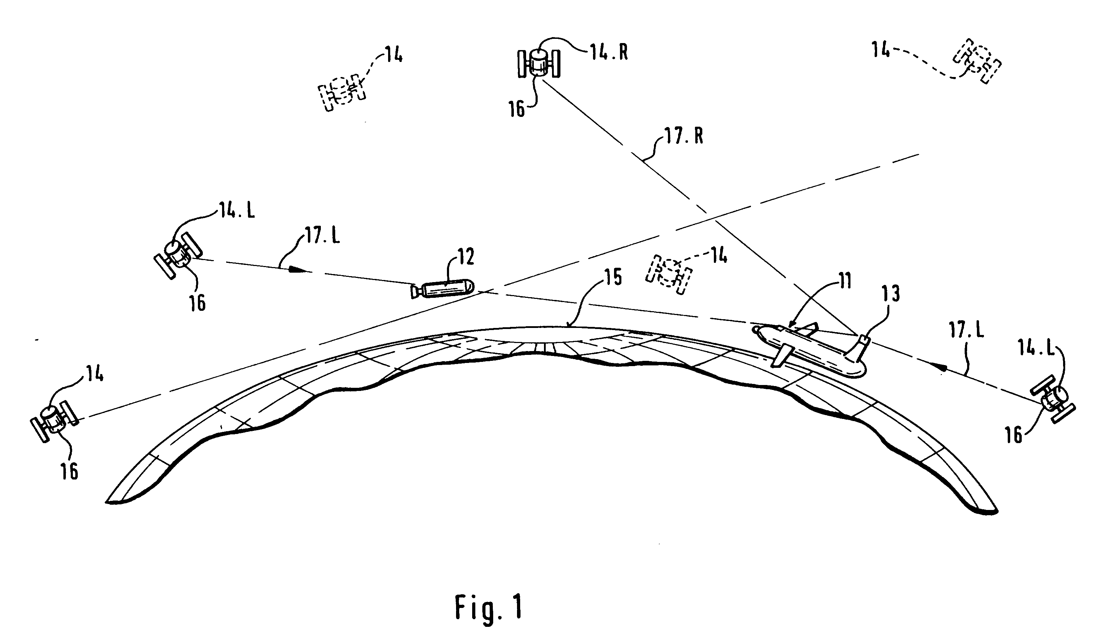

Zur Feststellung und Analyse einer eventuellen aktuellen Bedrohungssituation, in vorliegendem Zusammenhang auch einfach als Bedrohungsanalyse bezeichnet, ist das zu schützende Objekt 11 selbst mit einer oder mehreren Empfangseinrichtungen 13 für die Signale von Satelliten 14 ausgestattet, vorzugsweise von solchen, die azimutal um den aktuellen Standort des Objektes 11 herum verteilt möglichst niedrig über dem Horizont 15 stehen. Die Empfangseinrichtung 13 weist vorzugsweise eine Antennenkon figuration für sowohl ungerichteten wie auch abtastenden Empfang in Azimut und Elevation auf. Die in der Zeichnung voll ausgezogen skizzierten Satelliten 14 stehen längs ihrer jeweiligen Bahn gerade in der Zeichenebene der Fig. 1, die gestrichelt skizzierten Satelliten 14 in Blickrichtung dahinter versetzt. Die hohe Frequenz der von den Satelliten-Sendern 16 abgestrahlten Energie bedingt eine Ausbreitung ohne Boden- und Raumwellen-Erscheinungen, also eine im wesentlichen lichtstrahlförmig-lineare Ausbreitung, so daß beim Objekt 11 nur Sender 16 von Satelliten 14 empfangen werden, die über dem Horizont 15 stehen. Dabei werden durch die Funkverbindungen 17.L von besonders tief stehenden Satelliten 14.L zum tieffliegenden Objekt 11 besonders großräumige Gebiete in der Umgebung der Höhenlage des Objektes 11 überstrichen. Eine bestehende Funkempfangsverbindung 17 von einem Satelliten-Sender 16 zur Empfangseinrichtung 13 des Objekts 11 wird aber meßbar beeinträchtigt, wenn in sie der Angreifer 12 eintritt. Denn das führt zu Reflektions- und Abschattungseffekten (und zur Beeinflussung der wirksamen Polarisation), so daß sich nun z. B. plötzlich aus dieser Funkempfangsverbindung 17, deren Sender 16 für die Empfangseinrichtung 13 aufgrund dessen Kennung identifizierbar ist, keine stationäre oder stetig sich ändernde Entfernungsinformation mehr ausmitteln läßt. Da der momentane Standpunkt dieses Satelliten 14 aus den Tafeln über die aktuellen Satellitenbahnen, und der Standpunkt des empfangenden Objekts 11 aus der eigenen Positionsbestimmung, bekannt ist, ergibt sich durch eine signifikante Beeinflussung einer bestimmten Funkempfangsverbindung 17 die aktuelle Bedrohungsrichtung. Die Bedrohung kann dann verifiziert werden durch Funkaufklärung über die in dieser Richtung operierenden Luftfahrzeuge, was aber nicht an Bord des Objektes 11 erfolgen muß, sondern an Satelliten- und Bodenstationen der Luftüberwachung delegiert werden kann.

Die durch das Eindringen des Angreifers 12 erfolgende Beeinflussung der Funkempfangsverbindung 17 liegt in jedem Falle in einer Intensitätsverringerung und vor allem in einer signifikanten, aktuellen Verschlechterung des Signal-Rausch-Verhältnisses, außerdem im plötzlichen Auftreten von Interferenzen und Dopplererscheinungen. Streueffekte am Angreifer 12 sind desto diffuser, je größer dessen Abstand zum Objekt 11 noch ist. Diesen Effekten können sich Laufzeiteffekte von am Angreifer 12 reflektierter Sendeenergie eines oder mehrerer Satelliten überlagern. Wenn der Sender 16 extrem tief über dem Horizont 15 steht und deshalb die Funkverbindung 17.L eine zu starke Dämpfung in der Erdatmosphäre 15 erfährt, verbleibt immer noch die Möglichkeit der (schaltungstechnisch etwas aufwendigeren) Auswertung einer Beeinflussung der Polarisation der vom Sender 16 mit bekanntem Polarisationsvektor in die Funkverbindung 17.L abgestrahlten Energie, was zugleich eine grobe Typklassifikation des Angreifers 12 eröffnet. Weiterhin sind plötzlich auftretende Änderungen der Signallaufzeiten, Dopplerfrequenzen und der Signal/Rauschabstände der Satellitensignale meßbar.

Da die Bedrohungsanalyse an Bord des Objektes 11 nicht auf der Auswertung reflektierter eigener Sendeenergie beruht, resultiert daraus keine Erhöhung der Eigenverratswahrscheinlichkeit des Objektes 11. Bei vergleichbarer Sendeleistung ist die so zur passiven Bedrohungsanalyse erzielbare Reichweite um Größenordnungen länger, als mittels eines Radar, weil der Abstand zwischen dem Objekt 11 und dem Angreifer 12 bei dieser Fremdfeld-Auswertung nur einmal in die Messung eingeht, der Pegel also nur mit der zweiten und nicht mit der vierten Potenz des Abstands zum Objekt 11 sinkt. Die theoretische maximale Reichweite der Empfangseinrichtung 13 ist vom Orbit der Satelliten abhängig. Sie beträgt bei Navigationssatelliten ca. 20.000 km. Die Meßergebnisse der Bedrohungsanalyse sind außerdem unabhängig von der radarwirksamen Streukontur des Angreifers 12, da die Messungen ja nicht auf Reflexstrahlung sondern auf Beeinflussung externer Strahlung beruhen, so daß auch ein Angreifer 12 mit ausgeprägter Stealth-Geometrie nicht unerkannt bleibt. Selbst ein Angreifer 12 mit Hochfrequenzstrahlung absorbierender Struktur wird erkannt, weil ein nach den Bahndaten an einer bestimmten Position momentan an sich zu erwartender Satelliten-Sender 16 bei Eintritt eines solchen Angreifers 12 in diese spezielle Funkempfangsverbindung 17 gerade ausfällt, was ebenfalls eine markante Information für die Bedrohungsanalyse darstellt. Die Sensoreinrichtung bildet also den passiven Teil eines quasi multistatischen kohärenten Radarsystems, da sich die Sender relativ zum Objekt 11 scheinbar langsam bewegen. Es wird also auch der multistatische Radarquerschnitt des Angreifers 12 zur Auswertung herangezogen. Die niedrigen Sendeleistungen der Satelliten von ca. 50 Watt werden durch die nun möglichen langen Beobachtungszeiten (Zielverweilzeit) und die frequenzgespreizten (spread-spectrum) Dauerstrichsignale der Satelliten kompensiert.

Vorzugsweise werden für die Bedrohungsanalyse die unidirektionalen Funkempfangsverbindungen 17 von Navigations-Satelliten 14 etwa der Systeme NAVSTAR-GPS oder GLONASS ausgewertet. Denn deren Informationen werden an Bord des Objektes 11 zweckmäßigerweise ohnehin zur eigenen Standortbestimmung erfaßt, wofür bekanntlich Funkempfang von vier der mindestens fünf über dem Horizont 15 stehenden Satelliten 14 gegeben ist. Wenn für das Objekt 11 mehr Satelliten 14 "sichtbar" sind, werden zur Bedrohungsanalyse für eine möglichst großflächige Erfassung des Luftraums über dem Horizont 15 möglichst tiefstehend rund um das Objekt 11 verteilte Satelliten 14.L empfangen. Der Vorteil der Auswertung der Funkverbindungen 17 zu Navigations-Satelliten 14 besteht dabei nicht nur darin, daß deren Bahnen tabellarisch besonders genau bekannt sind, sondern auch darin, daß die Navigationsinformationen ideale Radarsignale darstellen, weil sie bereits für die höchst präzise Korrelations-Laufzeitmessung optimiert sind, mit Steigerungsmöglichkeit der Entfernungsmeßgenauigkeit durch Auswerten nicht nur der enternungsabhängigen Laufzeit, sondern zusätzlich auch der Trägerphasenänderung. Eine bezüglich des Empfangsaufwandes optimierte Rundum-Bedrohungsanalyse ergibt sich also, wenn drei möglichst tiefstehende Navigations-Satelliten 14.L gegenüber dem Standort des Objektes 11 um etwa 120^{°} azimutal versetzt sind und zusätzlich wenigstens ein weiterer Satellit 14.R möglichst in der Nähe des Zenit über dem Objekt 11 empfangen wird, um aus letzterem die Referenz-Zeitinformation und aus den anderen die darauf bezogenen Laufzeitinformationen für die eigene Standortbestimmung, und außerdem nun noch die Störinformation bei Eindringen eines Angreifers 12 in eine dieser Funkempfangsverbindungen 17.L, zu gewinnen.

Die Empfangseinrichtungen 13, mit denen das potentiell bedrohte Objekt 11 ausgestattet ist, weisen also mehrkanalig parallel arbeitende oder seriell umschaltende Eingangsstufen 18 für einen oder mehrere möglichst hoch stehende und richtungsunabhängig empfangene Referenz-Stalliten 14.R sowie für die möglichst tief über dem Horizont 15 richtungsselektiv erfaßte Auswahl von Überwachungs-Satelliten 14.L auf. Der Eingangsstufe 18 in der Empfangseinrichtung 13 ist wenigstens eine Vergleichsstufe 19 nachgeschaltet, die in den aktuell überwachten Funkempfangsverbindungen 17.L auf die oben erörterten signifikanten Änderungen im Vergleich zu den bekannten, aktuell zu erwartenden bzw. bei ungestörtem Empfang gemittelten Informationen von den spezifisch empfangenen Satelliten-Sendern 16 anspricht. Eine Auswahlschaltung 20 steuert ein Anzeigegerät 21 zur Darbietung derjenigen Relativrichtung (bzgl. der aktuellen Bewegung des Objektes 11), in der eine Funkempfangsverbindung 17.L mit hinreichender Wahrscheinlichkeit aktuell durch den Eintritt eines potentiellen Angreifers 12 beeinflußt wird, sowie eine Schnittstelle 22 zu einem Auswerte-Computer. In dem kann zusätzlich zu Richtungsinformationen eine Information über die Größe, die Entfernung und/oder über den Bewegungsvektor des Angreifers 12 relativ zum Objekt 11 bestimmt werden, etwa durch Vergleichsauswertung der Be einflussung anderer diesen Angreifer 12 gerade erfassender Funkempfangsverbindungen 17.

Jedenfalls stellt diese erfindungsgemäße Bedrohungsanalyse aufgrund signifikanter Beeinflussungen von Satelliten-Funkempfangsverbindungen 17 ein ideales da passives, also verratsfreies, und praktisch nicht zu störendes Frühwarnsystem, z. B. zur Einweisung eines um Größenordnungen teureren Feuerleit-Radars dagegen wesentlich geringerer Reichweite, dar, aber auch ein Mittel zum Schutz bodengebundener stationärer oder beweglicher Objekte. In letzterem Einsatzfalle ist zwar die erfaßbare Entfernung wegen der bodengebunden tiefstehenden Empfangseinrichtung 13 reduziert, dafür aber ist gegenüber der relativ schnell bewegten Empfangseinrichtung 13 an etwa einem Flugzeug der Signalverarbeitungsaufwand zum Aufspüren von Anomalien in Funkempfangsverbindungen 17 wegen der relativ zur Satellitenbewegung stationären Empfangsgegebenheiten geringer.

Die erfindungsgemäße Sensoreinrichtung erlaubt es also, die aktuelle Bedrohung eines zu schützenden Objektes 11 dadurch zu erfassen, daß von diesem Objekt 11 aus die Sender einer Anzahl möglichst niedrig über dem Horizont 15 stehender Satelliten 14.L empfangen werden, vorzugsweise der Satelliten 14, die einem Navigationssystem wie GPS oder GLONASS zugehören. Die Sensoreinrichtung erkennt die Richtung vom Objekt 11 zum Angreifer 12 daraus, daß bei dessen Eindringen in aktuelle Satelliten-Funkempfangsverbindungen 17.L die bisher quasi-stationäre Informationsaufnahme (insbesondere zur Entfernungsermittlung) in wenigsten dieser beobachteten Funkempfangsverbindung 17.L plötzlich etwa durch Dopplereffekte, durch Streuerscheinungen oder durch Abschattungen bzw. Absorptionen des Satelliten-Sendefeldes gestört wird. Das ermöglicht über eine extrem große Entfernung eine wirksame, rein passive (also eigenverratsfreie) Fernaufklärung zur Bedrohungsanalyse, ohne in der Umgebung des aktuellen Einsatzortes des zu schützenden erdgebundenen oder fliegenden Objektes 11 dafür aufwendige Installationen vornehmen zu müssen. Deshalb ist diese Sensoreinrichtung zur Bedrohungsanalyse insbesondere für die Versorgungs-Luft-, See- und Landfahrzeuge von beweglichen Krisenreaktionskräften geeignet.

Empfangsseitig werden also die sich ändernden Laufzeiteffekte, Phasen- und Dopplereffekte soweit die Signal-Rausch-Abstände der Satellitensignale in den ausgewerteten Funkempfangsverbindungen 17 als Folge des Eindringens eines potentiellen Angreifers 12 in diese Funkempfangsverbindungen 17 verarbeitet. Für eine frühzeitige, möglichst vollständige Störer-Analyse werden zweckmäßigerweise die Verarbeitungsinformationen zwischen Empfangseinrichtungen 13 ausgetauscht, die an mehreren Orten bzw. an Bord mehrerer zu schützender Objekte 11 betrieben und so vernetzt werden. Mit solchen Sensoreinrichtungen sind zweckmäßigerweise auch Multisensorplattformen oder Feuerleitradar-Stellungen ausgestattet.

Um die Satelliten-Sichtbarkeit, die Zielentdeckbarkeit und die Störfestigkeit der erfindungsgemäßen Sensoreinrichtung noch weiter zu steigern, können die Empfangseinrichtungen 13 dafür ausgelegt sein, die Funksignale von unterschiedlichen Navigations-Satellitensystemen im Zeitmuliplex und im Frequenzmultiplex parallel zu verarbeiten.

Zur Abwehr der mittels der erfindungsgemäßen Sensoreinrichtung analysierten aktuellen Bedrohungssituation durch fliegende Angreifer 12 können Flugabwehrprojektile Einsatz finden, die mit den beschriebenen Empfangseinrichtungen 13 als passiven Zieleinweisungssensoren ausgestattet sind und so sehr wirksam aus der Deckung heraus als "Faust" gegen Tiefflieger und Kampfhaubschrauber einsetzbar sind.

Für den Nahbereichs-Objektschutz (in der Größenordnung über einige 10 km) kann die Auswertung in der Empfangseinrichtung 13 dafür ausgelegt sein, den Eintritt eines potentiellen Angreifers 12 zu melden, etwa zum Schutz von Panzerfahrzeugen, von Transportflugzeugen oder von Gefechtsständen. Im Rahmen des Objektschutzes kann der potentielle Angreifer 12 im Mittelbereich (bis einige 100 km) gemeldet werden, beispielsweise zum Schutz von Schiffen gegen sogenannte Seaskimmer (mittels Auswertung der Funkempfangsverbindungen 17.L zu tiefstehenden Satelliten 14.L) bzw. gegen sogenannte Skydiver (durch Beobachtung der Funkempfangsverbindungen 17 zu zenitnahen Satelliten 14). Auch die Ortsveränderung von deren Waffenplattformen (im allgemeinen von Flugzeugen) kann durch diese Fernaufklärung ermittelt werden. Im ferneren Mittelbereich (um einige 1000 km) dient die erfindungsgemäße Sensoreinrichtung dazu, zum Schutz beispielsweise von Schiffen und Einrichtungen gegen angreifende Flugzeuge den Eintritt des potentiellen Angreifers 12 in eine Funkempfangsverbindung 17 zu melden. So läßt sich auch ein preiswertes aber wirksames Raumabwehr-Netz gewissermaßen als weitreichender Sensor-Schirm über größeren Regionen und selbst über ganzen Staatsterritorien einrichten.

Zur Unterdrückung von Störsendern (Jammer) ist die Empfangseinrichtung 13 mit wenigstens einer Antenne ausgerüstet, die eine elektronische Strahlschwenkung in Azimut und Elevation ermöglicht. Damit ist der Eintritt eines potentiellen Tiefflug-Angreifers 12, beispielsweise von Kampfflugzeugen, Dispensen und sogenannten Cruise Missiles, früh und zuverlässig erfaßbar.

Das in der Umgebung von militärischen bzw. zivilen Flugsicherungseinrichtungen diskutierte Elektrosmog-Problem wird gegenstandslos, wenn die erfindungsgemäße, passiv arbeitende Sensoreinrichtung auch für solche stationären Anwendungsfälle Einsatz findet. Gleichgültig, ob die Empfangseinrichtung 13 stationär oder beweglich betrieben wird, ist die Empfangseinrichtung 13 zweckmäßigerweise mit mindestens einer Rundum-Empfangsantenne für die Funkempfangsverbindung 17.L zu niedrigstehenden Satelliten 14.L sowie mit wenigstens einer Richtantenne für die Referenz-Funkempfangsverbindung 17.R ausgestattet.

## Patentansprüche

1. Sensoreinrichtung zum hochfrequenztechnischen Sensieren der aktuellen Bedrohung eines mit einer Empfangseinrichtung (13) ausgestatteten Objektes (11) durch einen in eine Funkverbindung (17) eindringenden Angreifer (12),
dadurch gekennzeichnet, daß die Empfangseinrichtung (13) für die Aufnahme von Funkempfangsverbindungen (17) von mehreren Satelliten (14) auf gleichen oder unterschiedlichen Frequenzen ausgelegt und mit wenigstens einer Vergleichsstufe (19) für die Bewertung von durch den eindringenden potentiellen Angreifer (12) beeinflußten im Vergleich zu unbeeinflußten Funkempfangsverbindung (17) ausgestattet ist.

2. Sensoreinrichtung nach Anspruch 1,
dadurch gekennzeichnet, daß die Empfangseinrichtung (13) zum Empfang mehrerer azimutal verteilt niedrig über dem Horizont (15) stehender Satelliten (14.L) und wenigstens eines dagegen zenitnäheren Satelliten (14.R) vorgesehen ist.

3. Sensoreinrichtung nach Anspruch 1 oder 2,
dadurch gekennzeichnet, daß eine sowohl rundum als auch azimutal und/oder elevativ abtastende Empfangseinrichtung (13) vorgesehen ist.

4. Sensoreinrichtung nach wenigstens einem der vorangehenden Ansprüche,
dadurch gekennzeichnet, daß ihre Empfangseinrichtung (13) mit mehrere Satelliten-Funkempfangsverbindungen (17) parallel verarbeitenden Eingangsstufen (18) ausgestattet ist.

5. Sensoreinrichtung nach wenigstens einem der Ansprüche 1-3,
dadurch gekennzeichnet, daß ihre Empfangseinrichtung (13) mehrere Satelliten-Funkempfangsverbindungen (17) seriell verarbeitet.

6. Sensoreinrichtung nach wenigstens einem der vorangehenden Ansprüche,
dadurch gekennzeichnet, daß die Empfangseinrichtung (13) zur Auswertung der Funkempfangsverbindungen (17) von Satelliten (14) eines Navigations-Satellitensystemes ausgelegt ist.

7. Sensoreinrichtung nach wenigstens einem der vorangehenden Ansprüche,
dadurch gekennzeichnet, daß die Empfangseinrichtung (13) mit einem Anzeigegerät (21) zur Richtungsanzeige bezüglich der durch einen eindringenden potentiellen Angreifer (12) gestörten Funkempfangsverbindung (17) ausgestattet ist.

8. Sensoreinrichtung nach wenigstens einem der vorangehenden Ansprüche,
dadurch gekennzeichnet, daß die Empfangseinrichtung (13) auf das Verschwinden von über Funkempfangsverbindungen (17) ermittelten quasi-stationären Entfernungsinformationen zwischen Satelliten (14) und dem zu schützenden Objekt (19) anspricht.

9. Sensoreinrichtung nach wenigstens einem der vorangehenden Ansprüche,
dadurch gekennzeichnet, daß die Empfangseinrichtung (13) auf eine infolge Eindringens eines potentiellen Angreifers (12) sich ändernde Polarisation der Satelliten-Sendeenergie in wenigstens einer Funkempfangsverbindung(17) anspricht.

## Claims

1. Sensor device for high-frequency sensing of the immediate threat to an object (11) fitted with a receiving device (13) posed by an attacker (12) entering a radio link (17), characterized in that the receiving device (13) is designed to establish radio reception links (17) with several satellites (14) on the same or different frequencies and is equipped with at least one comparison stage (19) for evaluating radio reception link (17) influenced by the potential attacker (12) entering it compared with uninfluenced radio reception link (17).

2. Sensor device according to Claim 1,
characterized in that the receiving device (13) is designed for reception from several satellites (14.L) located azimuthally distributed low over the horizon (15) and at least one satellite (14.R) which is comparatively zenithally closer.

3. Sensor device according to Claim 1 or 2,
characterized in that both an all-round and an azimuthally and/or elevationally scanning receiving device (13) is provided.

4. Sensor device according to at least one of the preceding claims,
characterized in that its receiving device (13) is equipped with several satellite radio reception links (17) to parallel-processing input stages (18).

5. Sensor device according to at least one of Claims 1 - 3,
characterized in that its receiving device (13) serially processes several satellite radio reception links (17).

6. Sensor device according to at least one of the preceding claims,
characterized in that the receiving device (13) is designed to evaluate radio reception links (17) with satellites (14) of a navigation satellite system.

7. Sensor device according to at least one of the preceding claims,
characterized in that the receiving device (13) is equipped with a display unit (21) for the directional indication of the radio reception link (17) disturbed by an intruding potential attacker (12).

8. Sensor device according to at least one of the preceding claims,
characterized in that the receiving device (13) responds to the disappearance of quasi-stationary items of distance information, between satellites (14) and the object (19) to be protected, detected by way of radio reception links (17).

9. Sensor device according to at least one of the preceding claims,
characterized in that the receiving device (13) responds to a changing polarization of the satellite transmitting energy in at least one radio reception link (17) as a result of the intrusion of a potential attacker (12).

## Revendications

1. Dispositif à capteur pour la détection, par technique des hautes fréquences, de la menace actuelle d'un objet (11), équipé d'un dispositif de réception (13), par un dispositif d'attaque (12), pénétrant dans une liaison radio (17),
caractérisé en ce que le dispositif de réception (13) est conçu pour recevoir des liaisons de réception radio (17) de plusieurs satellites (14) sur les mêmes fréquences ou des fréquences différentes et est équipé d'au moins un étage de comparaison (19) pour l'évaluation de liaisons de réception radio (17) influencées par le dispositif d'attaque (12) potentiel, pénétrant, par comparaison aux liaisons de réception radio (17) non influencées.

2. Dispositif à capteur selon la revendication 1,
caractérisé en ce que le dispositif de réception (13) est prévu pour la réception de plusieurs satellites (14.L) se tenant bas au-dessus de l'horizon (15), répartis azimutalement, et d'au moins un satellite (14.R) plus proche par contre du zénith.

3. Dispositif à capteur selon la revendication 1 ou 2,
caractérisé en ce qu'il est prévu un dispositif de réception (13) balayant aussi bien tout autour que azimutalement et/ou en élévation.

4. Dispositif à capteur selon l'une au moins des revendications précédentes,
caractérisé en ce que son dispositif de réception (13) est équipé d'étages d'entrée (18) traitant parallèlement plusieurs liaisons de réception radio par satellite (17).

5. Dispositif à capteur selon l'une au moins des revendications 1 à 3,
caractérisé en ce que son dispositif de réception (13) traite en série plusieurs liaisons de réception radio par satellite (17).

6. Dispositif à capteur selon l'une au moins des revendications précédentes,
caractérisé en ce que le dispositif de réception (13) est conçu pour l'exploitation des liaisons de réception radio (17) de satellites (14) d'un système de satellites de navigation.

7. Dispositif à capteur selon l'une au moins des revendications précédentes,
caractérisé en ce que le dispositif de réception (13) est équipé d'un appareil d'affichage (21) pour l'affichage de direction par rapport à la liaison de réception radio (17) perturbée par un dispositif d'attaque (12) potentiel, pénétrant.

8. Dispositif à capteur selon l'une au moins des revendications précédentes,
caractérisé en ce que le dispositif de réception (13) réagit à la disparition d'informations de distance quasi stationnaires, déterminées par des liaisons de réception radio (17), entre des satellites (14) et l'objet (19) à protéger.

9. Dispositif à capteur selon l'une au moins des revendications précédentes,
caractérisé en ce que le dispositif de réception (13) réagit à une polarisation, variant par suite de la pénétration d'un dispositif d'attaque (12) potentiel, de l'énergie d'émission de satellite, dans au moins une liaison de réception radio (17).
